# EUROPÄISCHE PATENTSCHRIFT

(11) **EP 1 979 119 B1**
(45) Veröffentlichungstag und Bekanntmachung des Hinweises auf die Patenterteilung: **19.08.2009**
(21) Anmeldenummer: 07711320.7
(22) Anmeldetag: 09.01.2007
(51) Int. Cl.: B23B 51/02

(54) **WERKZEUGSYSTEM**
TOOLING SYSTEM
SYSTEME D'OUTIL

(30) Priorität: 13.01.2006 DE 102006001739; 26.01.2006 DE 102006003686
(43) Veröffentlichungstag der Anmeldung: 15.10.2008
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss & Grosse
(86) Internationale Anmeldenummer: PCT/EP2007/000101
(87) Internationale Veröffentlichungsnummer: WO 2007/082652

(56) Entgegenhaltungen:
- EP-A- 1 310 312
- US-A1- 2002 172 569
- US-A1- 2003 039 523

## Beschreibung

Die Erfindung betrifft ein Werkzeugsystem mit mindestens zwei im Bereich einer Schnittstelle aneinander anliegenden Werkzeugteilen gemäß Oberbegriff des Anspruchs 1.

Werkzeugsysteme der hier angesprochenen Art sind grundsätzlich bekannt, zum Beispiel aus EP-A-1310312. Die hier angesprochenen Schnittstellen dienen dazu, Werkzeugteile eines Werkzeugsystems miteinander zu verbinden, sei es einen mit einer Werkzeugmaschine verbindbaren Halter mit einem Werkzeugkopf, einen Halter mit einem Adapter oder einem Zwischenstück, einen Adapter oder ein Zwischenstück mit einem Werkzeugkopf, einen Adapter oder ein Zwischenstück mit einem Werkzeugeinsatz, Adapter und/oder Zwischenstücke untereinander oder dergleichen. Die hier angesprochenen Werkzeugteile können also beliebig gewählt werden, um ein gewünschtes Werkzeugsystem zu realisieren und an unterschiedliche Einsatzfälle anzupassen. Zwischen je zwei aneinandergrenzenden Teilen eines Werkzeugsystems ist eine Schnittstelle vorgesehen, an der zwei Werkzeugteile des Werkzeugsystems miteinander verbindbar sind. Innerhalb eines Werkzeugs können mehrere Schnittstellen vorhanden sein, dieses kann also aus mehr als zwei Werkzeugteilen realisiert werden. Die im Bereich der Schnittstelle aneinander anliegenden Werkzeugteile weisen einander zugeordnete Berührungsflächen auf. Zur Drehmomentübertragung ist im Bereich der Schnittstelle eine Verzahnung vorgesehen. Die Berührungsflächen weisen also ineinandergreifende Zähne und Vertiefungen auf, die in zusammengebauten Zustand der Schnittstelle ein Drehmoment übertragen.

Das Werkzeugsystem ist so ausgebildet, dass mindestens ein Kühl-/Schmiermittelkanal vorgesehen ist, der mindestens ein Werkzeugteil durchdringt und der in der Berührungsfläche eines Werkzeugteils mündet. In zusammengebautem Zustand der Schnittstelle kann Kühl-/Schmiermittel von einem Werkzeugteil über die Schnittstelle hinweg zum anderen Werkzeugteil geführt werden.

Mindestens eines der Werkzeugteile eines Werkzeugsystems der angesprochenen. Art weist wenigstens eine geometrisch definierte Schneide auf, mit der Späne von einer Werkstückoberfläche abgetragen werden. Während der spanenden Bearbeitung eines Werkstücks kühlt und schmiert ein Kühl-/Schmiermittel die mindestens eine aktive Schneide. Es hat sich herausgestellt, dass die Werkzeugteile im Bereich der Schnittstelle unter verschiedenen Drehwinkelpositionen zusammengefügt werden können, sodass die Kühl-/Schmiermittelzufuhr im Bereich der Schnittstelle unterbrochen wird. Dies beruht darauf, dass ein Kühl-/Schmiermittelkanal des einen Werkzeugteils nicht mit den des im Bereich der Schnittstelle angrenzenden anderen Werkzeugteils fluchtet und das Medium nicht von dem einen Kanal in den anderen übertreten kann.

Aufgabe der Erfindung ist es daher, ein Werkzeugsystem zu schaffen, mit dem die hier angesprochenen Nachteile vermieden werden.

Zur Lösung dieser Aufgabe wird ein Werkzeugsystem vorgeschlagen, das die in Anspruch 1 genannten Merkmale aufweist.

Bei diesem Werkzeugsystem ist eine Schnittstelle vorgesehen, an der zwei Werkzeugteile aneinander liegen. Die einander zugeordneten Berührungsflächen der Werkzeugteile weisen Rippen und Vertiefungen auf, um eine Verzahnung zu bilden. Diese dient dazu, ein Drehmoment sicher über die Schnittstelle hinweg zu übertragen. Das Werkzeugsystem zeichnet sich dadurch aus, dass die Verzahnung so ausgebildet ist, dass die Berührungsflächen nur in mindestens einer bestimmten Drehwinkel-Stellung bezüglich der Mittelachse der Werkzeugteile zusammenfügbar sind. Aufgrund dieser Ausgestaltung ist es möglich, die Ausrichtung der beiden einer Schnittstelle zugeordneten Werkzeugteile so vorzugeben, dass ein Kühl-. /Schmiermittelkanal in einem ersten Werkzeugteil in einen Kühl-/Schmiermittelkanal in den zweiten Werkzeugteil übergeht. Vorzugsweise ist eine vollständige Überdeckung der Mündung des ersten Kühl-/Schmiermittelkanals mit der Mündung des zweiten Kühl-/Schmiermittelkanals vorgesehen. Er wäre aber auch möglich, eine Drehwinkel-Stellung vorzugeben, bei der zumindest eine Teilüberdeckung der beiden Kanäle gewährleistet ist, die einen ausreichenden Medienstrom über die Schnittstelle hinweg sicherstellt.

Ein bevorzugtes Ausführungsbeispiel des Werkzeugsystems zeichnet sich dadurch aus, dass wenigstens eine der Berührungsflächen der der Schnittstelle zugeordneten Werkzeugteile mindestens eine Erhebung aufweist. Dabei ist vorgesehen, dass die gegenüberliegende Berührungsfläche des zugehörigen Werkzeugteils mindestens eine Freistellung aufweist. Die beiden Werkzeugteile sind aufgrund dieser Ausgestaltung nur in mindestens einer bestimmten Drehwinkel-Stellung bezüglich der Mittelachse der Werkzeugteile zusammenfügbar, wobei die Ausrichtung der beiden Werkzeugteile auf einfache Weise realisierbar ist.

Ein weiteres bevorzugtes Ausführungsbeispiel des Werkzeugsystems zeichnet sich dadurch aus, dass die Erhebung integraler Bestandteil des zugehörigen Werkzeugteils ist. Sie wird also direkt am Grundkörper des Werkzeugteils ausgebildet. Es ist also nicht erforderlich, ein separates Teil vorzusehen, das die Winkelausrichtung der beiden Werkzeugteile im Bereich der Schnittstelle übernimmt. Damit ist es besonders einfach, die Drehwinkel-Stellung der beiden Werkzeugteile sicherzustellen.

Ein weiteres bevorzugtes Ausführungsbeispiel des Werkzeugsystems zeichnet sich dadurch aus, dass durch mehrere Erhebungen und Freistellungen im Bereich der Berührungsflächen mehr als eine Drehwinkel-Stellung zwischen den beiden Werkzeugteilen möglich ist. Damit kann das Werkzeugsystem im Bereich der Schnittstelle verschiedenen Anforderungen gerecht werden. Es ist beispielsweise auch möglich, die Ausrichtung der beiden Werkzeugteile so zu wählen, dass Schneiden, Führungsbereiche, insbesondere Führungsleisten, Spanabführungsnuten und dergleichen, die auf einem Werkzeugteil vorgesehen sind, mit entsprechenden Ausgestaltungen auf dem anderen Werkzeugteil abzustimmen.

Besonders bevorzugt wird schließlich ein Ausführungsbeispiel des Werkzeugsystems, bei dem eine Anzahl von Erhebungen und Freistellungen vorgesehen ist, die - in Umfangsrichtung gesehen - gleichmäßig verteilt sind. Eine derartige Ausgestaltung erlaubt es, auf einfache Weise verschiedene Drehwinkel-Stellungen der beiden Werkzeugteile zuzulassen, wobei die Herstellung derartig gleichmäßiger Abstände relativ einfach und kostengünstig ist.

Weitere Ausgestaltungen ergeben sich aus den Unteransprüchen.

Die Erfindung wird im Folgenden anhand der Zeichnung näher erläutert. Es zeigen:
- Figur 1: ein erstes Werkzeugteil eines Werkzeugsystems in Seitenansicht;
- Figur 2: eine vergrößerte Stirnseitenansicht des ersten Werkzeugteils gemäß Figur 1;
- Figur 3: ein zweites Werkzeugteil des Werkzeugsystems in Seitenansicht;
- Figur 4: eine Rückansicht des zweiten Werkzeugteils gemäß Figur 3 und
- Figur 5: eine perspektivische Rückansicht des Seitenwerkzeugteils gemäß Figur 3.

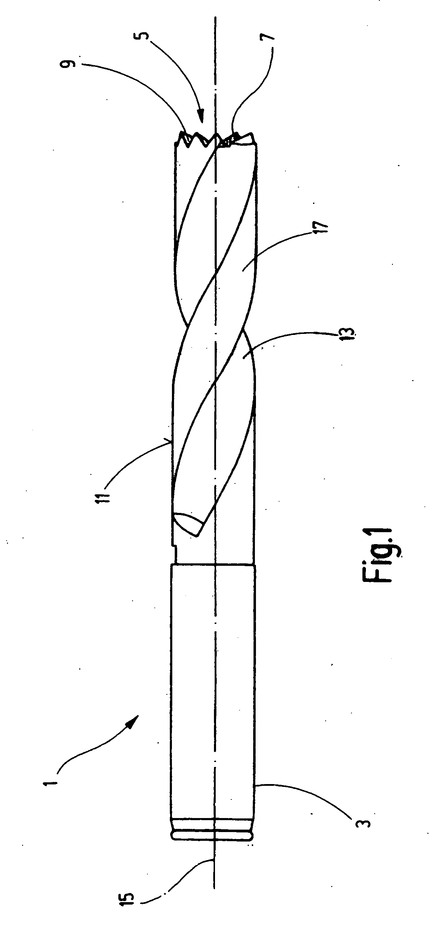

Figur 1 zeigt ein erstes Werkzeugteil 1 eines Werkzeugsystems, das über eine geeignete Halterung beispielsweise mit einer Werkzeugmaschine beziehungsweise deren Werkzeugspindel verbindbar ist.

Die Halterung ist hier als zylindrischer Schaft 3 ausgebildet. Es sind aber auch andere Befestigungsmöglichkeiten, beispielsweise kegelförmige Schäftausführungen oder Hohlschaftverbindungen verwendbar, auf die hier nicht näher eingegangen wird.

An der dem Schaft 3 abgewandten gegenüberliegenden Stirnseite des ersten Werkzeugteils 1 ist eine Berührungsfläche 5 ausgebildet, über die das erste Werkzeugteil 1 an einer entsprechenden Berührungsfläche eines zweiten Werkzeugteil anliegt, wobei im Bereich der Berührungsflächen der beiden Werkzeugteile eine Schnittstelle gebildet wird. Die beiden Werkzeugteile werden im Bereich der Schnittstelle fest aneinander gespannt, es werden also in axialer Richtung Kräfte aufgebaut, die die beiden Werkzeugteile im Bereich der Schnittstelle gegeneinander pressen.

Die Berührungsfläche 5 des ersten Werkzeugteils 1 weist eine Anzahl von Zähnen 7 auf, zwischen denen Vertiefungen 9 liegen. Die Anzahl und Ausgestaltung der Zähne und Vertiefungen ist letztlich nicht von entscheidender Bedeutung. Wichtig ist, dass die Berührungsfläche 5 des ersten Werkzeugteils 1 so ausgebildet ist, dass die Zähne 7 und Vertiefungen 9 in entsprechende Vertiefungen und Zähne im Berührungsbereich des zweiten Werkzeugteils eingreifen können und damit eine Verzahnung bilden. Diese dient dazu, ein in das erste Werkzeugteil 1 eingeleitetes Drehmoment über die Schnittstelle hinweg auf das zweite Werkzeugteil zu übertragen.

Die Umfangsfläche 11 des ersten Werkzeugteils weist mindestens eine Nut 13 auf, die bei Einsatz des Werkzeugsystems und Verwendung des ersten Werkzeugteils 1 dazu dient, Späne, die von einem Werkstück abgetragen werden, abzutransportieren und von der Bearbeitungsstelle wegzuführen.

Die Nut 13 kann mehr oder weniger parallel zur Mittelachse 15 des ersten Werkzeugteils verlaufen, oder aber, wie hier, entlang einer gedachten Schraubenlinie.

Zwischen den Gängen der Nut liegen Bereiche der Umfangsfläche, die auf einer gedachten zylindrischen Fläche liegen und damit als Führungsbereiche 17 dienen können.

Es ist grundsätzlich bekannt, Führungsbereiche auch durch Führungselemente, insbesondere Führungsleisten, zu realisieren, die in die Umfangsfläche eines Werkzeugs eingesetzt werden und aus einem besonders hartem Material bestehen, das einerseits optimale Führungseigenschaften aufweist, andererseits sich dadurch auszeichnet, dass bei der Bearbeitung von Bohrungen keine Materialanlagerungen (Aufschweißungen) eintreten.

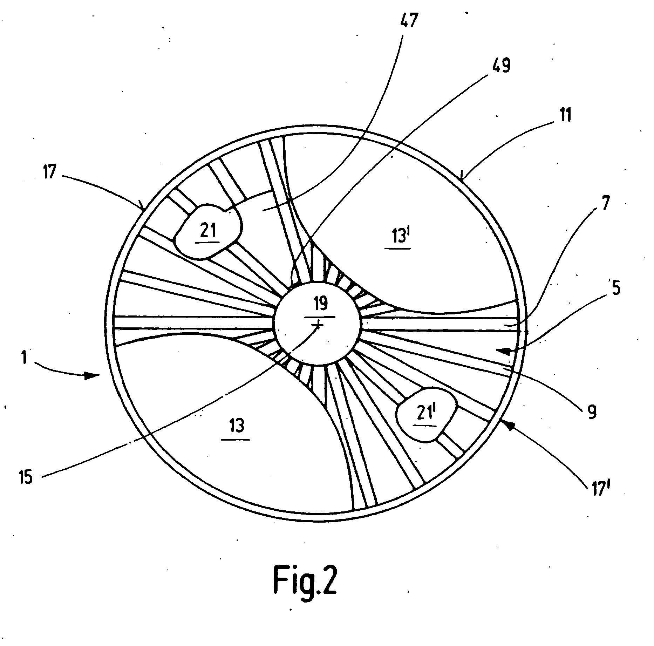

Figur 2 zeigt in vergrößerter Darstellung die Stirnseite des ersten Werkzeugteils 1, nämlich die Berührungsfläche 5. Deutlich erkennbar ist, dass das hier dargestellte erste Werkzeugteil zwei Nuten 13 und 13' aufweist, die symmetrisch zueinander angeordnet sind. Erkennbar sind auch, die Zähne 7 und Vertiefungen 9, die hier radial verlaufen und von innen nach außen, also von der Mittelachse 15 zur Umfangsfläche 11, breiter werden.

Aus der Stirnansicht gemäß Figur 2 wird deutlich, dass das erste Werkzeugteil 1 eine zentrale Durchgangsöffnung 19 aufweist, die ein Spannelement zum Verspannen zweier Werkzeugteile im Bereich einer Schnittstelle aufnimmt. Denkbar ist es, einen das erste Werkzeugteil durchdringenden und in das zweite Werkzeugteil eingreifenden Zuganker zu verwenden, oder aber eine Schraube, die das hier nicht dargestellte zweite Werkzeugteil durchdringt und mit einem Innengewinde in der Durchgangsöffnung 19 zusammenwirkt.

Außerdem ist erkennbar, dass das erste Werkzeugteil mindestens einen, hier zwei Kühl-/Schmiermittelkanäle 21, 21' aufweist, die in der Berührungsfläche 5 münden und dazu dienen, ein Kühl-/Schmiermittel an das hier nicht dargestellte zweite Werkzeugteil zu übergeben.

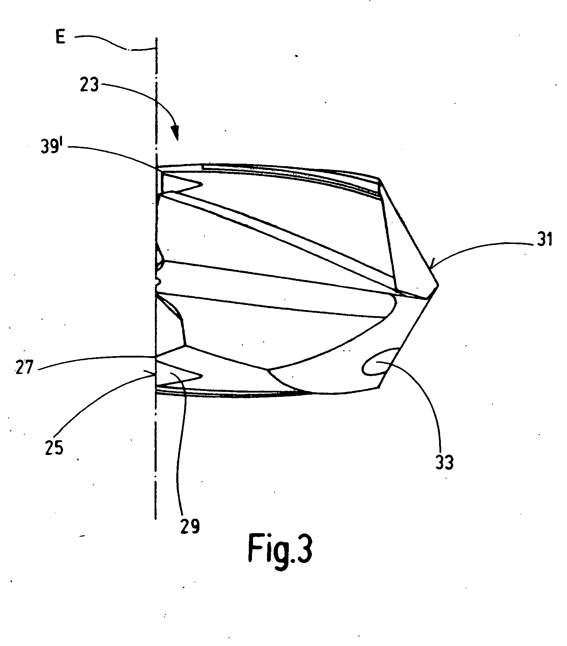

Figur 3 zeigt ein zweites Werkzeugteil 23 eines Werkzeugsystems in Seitenansicht. Es handelt sich hier beispielhaft um einen Werkzeugkopf, der auf das erste Werkzeugteil 1, das hier als Grundkörper ausgebildet ist, aufsetzbar ist. Das zweite Werkzeugteil 23 weist eine Berührungsfläche 25 auf, die mit Zähnen 27 und Vertiefungen 29 versehen ist, um eine Verzahnung zu realisieren. Wird also das zweite Werkzeugteil 23 mit seiner Berührungsfläche 25 auf die Berührungsfläche 5 des ersten Werkzeugteils 1 aufgesetzt, so wird eine Schnittstelle geschaffen, die eine Verzahnung aufweist, um einen Drehmoment von dem ersten Werkzeugteil 1 auf das zweite Werkzeugteil 23 übertragen zu können.

Die der Berührungsfläche 25 gegenüberliegende Stirnseite 31 des zweiten Werkzeugteils 23 ist hier als Bohrspitze ausgelegt. Hier könnte auch eine Zähne und Vertiefungen aufweisende Berührungsfläche vorgesehen sein, um eine weitere Schnittstelle zu realisieren. Auch das zweite Werkzeugteil 23 ist mit mindestens einem Kühl-/Schmiermittelkanal versehen, der in der Stirnseite 31, außerdem in der Berührungsfläche 25 mündet. Es ist also möglich, über die Schnittstelle hinweg ein Kühl-/Schmiermittel durch das erste Werkzeugteil 1 in das zweite Werkzeugteil 23 zu fördern.

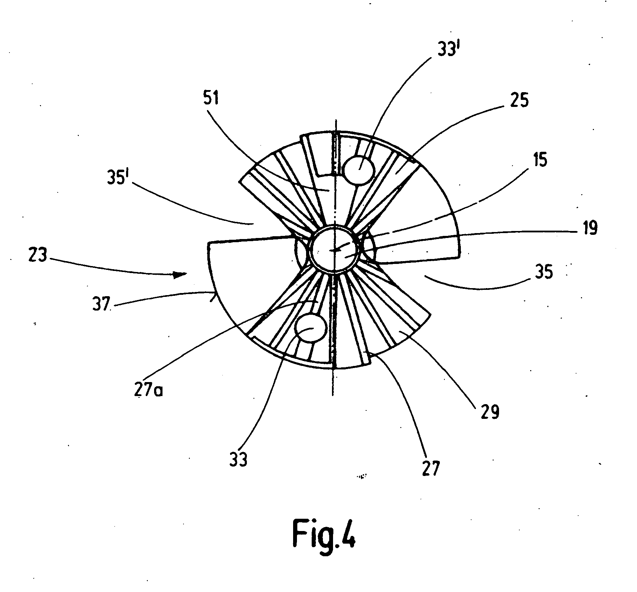

Die in Figur 4 dargestellte Rückansicht des zweiten Werkzeugteils 23 zeigt die Berührungsfläche 25 mit den Zähnen 27 und den Vertiefungen 29. Außerdem ist ersichtlich, dass auch das zweite Werkzeugteil 23 mindestens eine, hier zwei symmetrische Nuten 35 und 35' aufweist, über die von dem zweiten Werkzeugteil 23 abgetragene Späne eines Werkstücks aus dem Bearbeitungsbereich abgeführt werden können.

Bei dieser Ansicht ist erkennbar, dass das zweite Werkzeugteil zwei diametral gegenüberliegende Kühl-/Schmiermittelkanäle 33 und 33' aufweist. Durch die in der Berührungsfläche 25 mündenden Kühl-/Schmiermittelkanäle 33 und 33' kann von dem ersten Werkzeugteil 1 über dessen Kühl-/Schmiermittelkanäle 21, 21' ein Kühlmittel in das zweite Werkzeugteil 23 eintreten und aus der Stirnseite 31 austreten.

Die Rückansicht des zweiten Werkzeugteils 23, das auch in Figur 3 dargestellt wurde, zeigt, dass die Berührungsfläche 25 mit einer Anzahl von Zähnen 27 und Vertiefungen 29 versehen ist, die hier radial zur Mittelachse 15 des zweiten Werkzeugteils 25 verlaufen und an eine auch hier vorgesehene Durchgangsöffnung 19 angrenzen. Sie sind Teil einer im zusammengebauten Zustand der beiden Werkzeugteile realisierten Verzahnung im Bereich der Schnittstelle.

Die Draufsicht auf die zweite Berührungsfläche 25 zeigt auch den mindestens einen Kühl-/Schmiermittelkanal 33. Hier ist ein diametral gegenüberliegender zweiter Kühl-/Schmiermittelkanal 33' vorgesehen. Aus dieser Darstellung sind die Nuten 35 und 35' zu erkennen, die der Abfuhr von von der mindestens einen geometrisch definierten Schneide des zweiten Werkzeugteils 23 abgetragenen Späne dienen und entweder im Wesentlichen parallel zur Mittelachse 15 angeordnet sind oder entlang einer gedachten Schraubenlinie verlaufen.

Die Nuten 35 und 35' sind in die Umfangsfläche 37 des zweiten Werkzeugteils 23 eingebracht. Breite und Tiefe der Nuten sind an den jeweiligen Anwendungsfall angepasst.

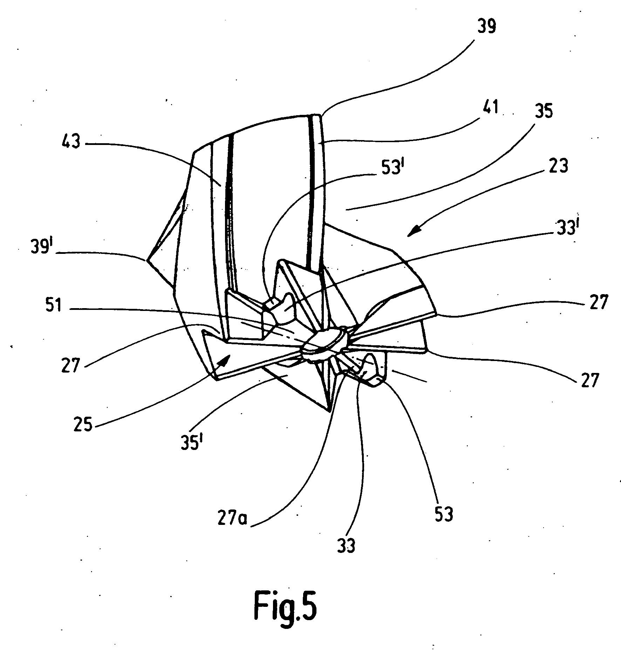

Figur 5 zeigt eine perspektivische Ansicht der in Figur 4 wiedergegebenen Berührungsfläche 25 des zweiten Werkzeugteils 23. Gleiche Teile sind mit gleichen Bezugsziffern versehen, sodass in sofern auf die Beschreibung der vorangegangenen Figuren verwiesen wird, um Wiederholungen zu vermeiden.

Auch diese perspektivische Darstellung zeigt, dass in die Berührungsfläche 25 die beiden Kühl-/Schmiermittelkanäle 33, 33' münden. Es ist also möglich, über die Kühl-/Schmiermittelkanäle 21, 21' des ersten Werkzeugteils 1 ein Medium in das zweite Werkzeugteil 23 einzuleiten und an Schneiden des zweiten Werkzeugteils weiterzuleiten.

Aus der Darstellung gemäß Figur 5 ist ersichtlich, dass das zweite Werkzeugteil 23 eine geometrisch definierte Schneide 39 aufweist, die bei Verwendung des zweiten Werkzeugteils 23 Späne von einem Werkstück abträgt. Hier ist vorgesehen, dass der Schneide 39 eine geometrisch definierte Schneide 39' diagonal gegenüberliegt.

Die von den Schneiden 39, 39' abgetragenen Späne gelangen in die Nuten 35, 35' und können so aus dem Bearbeitungsbereich abgeführt werden.

An die Schneide 39 schließt sich eine Führungsfase 41 an. Die Führungsfase der Schneide 39' ist hier nicht erkennbar.

In einem in Umfangsrichtung gemessenen Abstand zur Führungsfase 41, 41' ist eine zweite Führungsfase 45 vorgesehen, die bei der Bearbeitung eines Werkstücks das zweite Werkzeugteil 23, wie die erste Führungsfase 41, führt.

Zwischen den Führungsfasen 41 und 43 ergibt sich quasi eine Nut 45, die gegenüber den Fasen zurückspringt.

Die Nut 45 kann sich im wesentlichen parallel zur Mittelachse 15 des zweiten Werkzeugteils 23 erstrecken, oder aber entlang einer gedachten Schraubenlinie verlaufen.

Bei der Darstellung gemäß Figur 5 wird bei der Bearbeitung eines Werkstücks das zweite Werkzeugteil 23 in Richtung seiner Mittelachse 15 nach vorne bewegt, sodass aus den Kühl-/Schmiermittelkanälen 33, 33' im Bereich der Stirnseite 31 austretendes Kühl-/Schmiermittel in die Nut 45 geführt werden kann.

Im Folgenden wird näher darauf eingegangen, wie durch spezielle Ausgestaltung einer oder beider Berührungsflächen der Werkzeugteile im Bereich der Schnittstelle eine definierte Drehwinkel-Stellung der beiden Werkzeugteile 1 und 23 bezüglich der Mittelachse 15 realisierbar ist.

Zunächst wird näher auf Figur 2 eingegangen, die die Berührungsfläche 5 des ersten Werkzeugteils 1 wiedergibt:

Das erste Werkzeugteil 1 zeigt im Bereich seiner Berührungsfläche 5 eine auch als Freistellung 47 bezeichnete Ausnehmung, in die eine Erhebung eingreifen kann, auf die unten näher eingegangen wird.

Für die Realisierung der definierten Drehwinkel-Stellung im Bereich der Schnittstelle ist es nicht von entscheidender Bedeutung, wie die Kontur der Freistellung 47 ausgebildet wird und wie viele Freistellungen im Bereich der Berührungsstelle 5 vorgesehen sind.

Bei dem hier dargestellten Ausführungsbeispiel ist die Freistellung 47 im Wesentlichen kreissegmentartig ausgebildet. Sie endet unmittelbar vor der Durchgangsöffnung 19 und ist von dieser durch einen Steg 49 getrennt. Durch diesen Steg 49 wird die Freistellung 47 fluiddicht gegenüber der Durchgangsöffnung 19 abgeschottet.

Die in radialer Richtung gemessene Länge der Freistellung 47 ist hier so gewählt, dass diese sich nicht bis zur Umfangsfläche 11 des ersten Werkzeugteils 1 erstreckt.

Bei dem hier dargestellten Ausführungsbeispiel wird die Freistellung 47 von dem Kühl-/Schmiermittelkanal 21 geschnitten. Da sowohl eine Abdichtung gegenüber der Durchgangsöffnung 19 durch den Steg ,49 gewährleistet ist, als auch gegenüber der Umfangsfläche 11, kann das im Kühl-/Schmiermittelkanal vorhandene im zusammengebauten Zustand der Schnittstelle Medium nicht austreten.

Denkbar ist es aber auch, den Kühl-/Schmiermittelkanal 21 gänzlich von der Freistellung 47 zu trennen, sodass das Medium in dem genannten Kanal nicht in den Bereich der Freistellung 47 gelangen kann.

Im Folgenden wird auf Figur 4 näher eingegangen, die eine Draufsicht auf die Berührungsfläche 25 des zweiten Werkzeugteils 23 zeigt.

Hier ist ersichtlich, dass die Berührungsfläche 25 mindestens eine vorzugsweise als Füllelement ausgebildete Erhebung 51 aufweist, die so ausgebildet ist, dass sie in die Freistellung 47 des ersten Werkzeugteils 1 eingreifen kann.

Durch die Anordnung der Erhebung 51 in der Berührungsfläche 25 des zweiten Werkzeugteils 23 wird sichergestellt, dass die beiden Werkzeugteile 1 und 23 nur in der Drehwinkel-Stellung zusammengefügt werden können, in der die Erhebung 51 in die Freistellung 47 eingreift.

Durch die Anordnung einerseits der Freistellung 47 im ersten Werkzeugteil 1 und andererseits der Erhebung 51 am zweiten Werkzeugteil 23 kann also sichergestellt werden, dass die Mündungen von Kühl-/Schmiermittelkanälen ganz oder zum Teil miteinander fluchten und ein Kühl-/Schmiermittel über die Schnittstelle hinweg gefördert werden kann. Auch kann sichergestellt werden, dass Nuten 13, 13' am ersten Werkzeugteil 1 mit Nuten 35, 35' am zweiten Werkzeugteil 23 miteinander fluchten, sodass Späne aus dem Bereich des zweiten Werkzeugteils 23 ohne weiteres in den Bereich des ersten Werkzeugteils 1 überführt werden können.

Besonders kostengünstig ist es, wenn die Erhebung 51 einstückig mit dem zweiten Werkzeugteil 23 ausgebildet, also aus dem Grundkörper des zweiten Werkzeugteils 23 herausgearbeitet ist. Dies kann beispielsweise durch Erosions- oder Laserverfahren realisiert werden, aber auch durch Metallinjektions-Formverfahren (Metal Injection Molding, MIM), oder Sinterverfahren.

Figur 5 zeigt die Berührungsfläche 25 des zweiten Werkzeugteils 23 in perspektivischer Ansicht. Gleiche Teile sind mit gleichen Bezugsziffern versehen, sodass insofern auf die Beschreibung zu Figur 4 verwiesen wird.

Figur 5 zeigt, dass die Erhebung 51 so ausgebildet ist, dass sie in einer Ebene mit den höchsten Punkten der Zähne 27 liegt. Die Höhe der Erhebung 51 ist aber frei wählbar und kann an verschiedene Realisierungsmöglichkeiten der Schnittstelle angepasst werden.

Aus Figur 5 ist noch erkennbar, dass der Zahn, der die Kühl-/Schmiermittelkanäle 33, 33' des zweiten Werkzeugteils 23 schneidet, einen erniedrigten Bereich 53, 53' aufweist, sodass die Kühl-/Schmiermittelkanäle von den Zähnen des ersten Werkzeugteils 1 bei Zusammenbau der Schnittstelle nicht vollständig abgeschlossen werden. Vielmehr ergibt sich ein radial von den Kühl-/schmiermittelkanälen 33, 33' ausgehender Auslass, über den das in den Kanälen geführte Medium radial austreten kann.

Die definierte Drehwinkel-Stellung der beiden Werkzeugteile 1 und 23, die durch die Freistellung 47 und die Erhebung 51 gewährleistet ist, erlaubt es, an definierten Positionen auf diese Weise gezielte Auslässe zu realisieren, beispielsweise, um die Schmierung der Führungsfasen, insbesondere der Führungsfase 43 zu gewährleisten.

Aus den Erläuterungen zu den Figuren 1 bis 5 wird deutlich, dass die definierte Drehwinkel-Stellung der beiden einer Schnittstelle zugeordneten Werkzeugteile 1 und 23 auf einfache Weise realisierbar ist. Dabei kommt es nicht darauf an, wie viele Freistellungen und Erhebungen vorgesehen werden und auch nicht darauf, ob die Freistellung am ersten Werkzeugteil 1 und die Erhebung 51 am zweiten Werkzeugteil 23 vorgesehen ist. Die Freistellung und die Erhebung können also ausgetauscht werden. Es ist auch denkbar, komplementär ausgebildete Freistellungen und Erhebungen auf beiden Berührungsflächen 5 und 25 vorzusehen und damit definierte Drehwinkel-Stellungen zu gewährleisten.

Durch die Festlegung der Anzahl der Freistellungen und Erhebungen können auch mehr als eine Drehwinkel-Stellung zwischen den beiden Werkzeugteilen ermöglicht werden.

Besonders bevorzugt wird ein Werkzeugsystem, bei dem Erhebungen und Freistellungen im gleichen Umfangsabstand zueinander vorgesehen sind, was die Herstellung vereinfacht.

Durch die definierte Drehwinkel-Stellung zweier aneinander angrenzender Werkzeugteile einer Schnittstelle können verschiedene Funktionsmerkmale sichergestellt werden, beispielsweise die Überleitung von Kühl-/Schmiermittel über die Schnittstelle hinweg, die Fortsetzung von Nuten eines Werkzeugteils in Nuten des anderen Werkzeugteils, die Fortsetzung von Führungsbereichen in einem Werkzeugteil in dem anderen Werkzeugteil. Es mag also eine Anzahl von Gründen geben, die eine exakte Drehwinkel-Ausrichtung der beiden Werkzeugteile im Bereich der Schnittstelle erforderlich macht. In allen Fällen wird hier eine einfache Lösung zur Realisierung dieser Positionierung gewährleistet.

## Patentansprüche

1. Werkzeugsystem mit mindestens zwei im Bereich einer Schnittstelle aneinander anliegenden Werkzeugteile (1,23), deren einander zugeordnete Berührungsflächen (15,25) zur Ausbildung einer Verzahnung mit ineinander greifenden Zähnen (7,27) und Vertiefungen (9,29) versehen sind, und die Verzahnung so ausgebildet ist, dass die Berührungsflächen (5,25) nur in mindestens einer bestimmten Drehwinkel-Stellung bezüglich der Mittelachse (15) der Werkzeugteile zusammenfügbar sind, **dadurch gekennzeichnet, dass** wenigstens eine der Berührungsflächen (15,25) mindestens eine Erhebung (51) aufweist, wobei die Erhebung (51) als zwischen zwei Zähnen vorgesehenes Füllelement realisierbar ist und die andere der Berührungsflächen mindestens eine Freistellung (47) im Bereich eines Zahnes aufweist.

2. Werkzeugsystem nach Anspruch 1 **dadurch gekennzeichnet, dass** durch mehrere Erhebungen und Freistellungen mehr als eine Drehwinkel-Stellung zwischen den beiden Werkzeugteilen (1,23) möglich ist, die ein Zusammenfügen der Werkzeugteile (1,23) im Bereich der Schnittstelle erlauben.

3. Werkzeugsystem nach einem der vorhergehenden Ansprüche, **dadurch gekennzeichnet, dass** eine Anzahl von Erhebungen und Freistellungen vorgesehen ist, die - in Umfangsrichtung gesehen - gleichmäßig verteilt sind.

## Claims

1. Tool system comprising at least two tool parts (1, 23) that bear on one another in the region of an interface and whose mutually assigned contact surfaces (5, 25) are provided with mutually engaging teeth (7, 27) and recesses (9, 29) for the purpose of constituting a tooth system, and the tooth system is so constituted that the contact surfaces (5, 25) can be joined only in at least one particular rotational angle position in respect of the central axis (15) of the tool parts, **characterized in that** at least one of the contact surfaces (5, 25) has at least one elevation (51), the elevation (51) being realizable as a filling element provided between two teeth, and the other of the contact surfaces having at least one clearance (47) in the region of a tooth.

2. Tool system according to Claim 1, **characterized in that** a plurality of elevations and clearances renders possible more than one rotational angle position between the two tool parts (1, 23), said positions enabling the tool parts (1, 23) to be joined in the region of the interface.

3. Tool system according to either one of the preceding claims, **characterized in that** there are provided a number of elevations and clearances, which - viewed in the circumferential direction - are distributed uniformly.

## Revendications

1. Système d'outil avec au moins deux éléments d'outil (1, 23) appliqués l'un contre l'autre dans la région d'une interface, dont les surfaces de contact (5, 25) affectées l'une à l'autre sont munies de dents (7, 27) et de creux (9, 29) s'engageant les uns dans les autres pour la formation d'une denture, cette denture étant formée de telle sorte que les surfaces de contact (5, 25) ne sont assemblables que dans une position d'angle de rotation déterminée relativement à l'axe central (15) des éléments d'outil, **caractérisé en ce qu'**au moins une des surfaces de contact (5, 25) présente au moins une élévation (51), l'élévation (51) étant réalisable comme élément de garnissage prévu entre deux dents et l'autre surface de contact présentant au moins un évidement (47) dans la région d'une dent.

2. Système d'outil selon la revendication 1, **caractérisé en ce que**, au moyen de plusieurs élévations et de plusieurs évidements, plus d'une position d'angle de rotation permettant un assemblage des éléments d'outil (1, 23) dans la région de l'interface est possible entre les deux éléments d'outil (1, 23).

3. Système d'outil selon l'une des revendications précédentes, **caractérisé en ce qu'**un nombre d'élévations et d'évidements est prévu, lesquels sont répartis régulièrement - vu dans la direction circonférentielle.
